# EUROPÄISCHE PATENTSCHRIFT

(11) **EP 2 034 576 B1**
(45) Veröffentlichungstag und Bekanntmachung des Hinweises auf die Patenterteilung: **07.10.2020**
(21) Anmeldenummer: 08162060.1
(22) Anmeldetag: 08.08.2008
(51) Int. Cl.: H02G 3/04, C09J 7/22, C09J 7/21

(54) **Klebeband zur Längsummantelung von langgestrecktem Gut**
Adhesive band for longitudinal sheathing of extended goods
Bande adhésive destinée à l'enveloppement de marchandises longitudinales

(30) Priorität: 06.09.2007 DE 202007012475 U
(43) Veröffentlichungstag der Anmeldung: 11.03.2009
(73) Patentinhaber: Coroplast Fritz Müller GmbH & Co. KG, 42279 Wuppertal (DE)
(72) Erfinder: Lodde, Christoph, 59439 Holzwickede (DE); Frigge, Christoph, 45549, Sprockhövel (DE)
(74) Vertreter: Patent- und Rechtsanwälte Dr. Solf & Zapf

(56) Entgegenhaltungen:
- WO-A-2006/108871
- DE-A1- 10 036 805
- DE-A1-102005 013 124
- DE-U1- 9 400 574
- DE-U1- 29 510 907
- DE-U1- 29 711 387
- US-A- 4 327 246
- US-A1- 2007 104 927
- US-A1- 2007 154 684

## Beschreibung

Die Erfindung betrifft ein Klebeband zur Längsummantelung von langgestrecktem Gut, insbesondere ein Kabelwickelband, umfassend einen bandförmigen Träger und mindestens eine auf einer Seite des Trägers aufgetragene Klebeschicht nach dem Oberbegriff des Anspruchs 1.

Im Automobilbereich werden Kabelsätze oftmals mit Klebebändern umwickelt, wobei vor allem textile Klebebänder neben der reinen Bündelungsfunktion mittlerweile zahlreiche Zusatzfunktionen, wie den Schutz der Leitungen vor Abrieb oder die Dämpfung von Klapper- oder Vibrationsgeräuschen, übernommen haben. Weit verbreitet ist dabei der Einsatz sowohl von Gewebeklebebändern, als auch von verschiedenartigen Vliesklebebändern, Folienklebebändern und Schaumstoffklebebändern

Als Alternative zu einer weithin üblichen Bewicklung von langgestrecktem Gut, bei der beispielsweise Kabelsätze mit einem Klebeband umwickelt werden, das in Längsrichtung des Gutes mit teilweiser Überlappung schraubenlinienförmig um das Gut geführt wird, werden auch verschiedene andere Systeme zur Längsumhüllung angeboten. Marktüblich vertreten sind dabei derzeit vollflächig klebende Längsverklebungsbänder zur automatischen oder manuellen Verarbeitung und Produkte mit einem nicht klebenden Mittelteil und einem oder zwei seitlichen Klebestreifen, wie sie beispielsweise in der DE 100 36 805 A1 beschrieben sind. Nachteilig bei diesen letzteren Produkten ist ihre relativ aufwändige Fertigung mit den schmalen seitlichen Klebestreifen. Das Einrichten einer zur Herstellung dieser Bänder notwendigen Kaschiermaschine ist, insbesondere bedingt durch die für die Zuführung der Klebebandstreifen erforderliche Präzision, sehr aufwändig. Nachteilig ist weiterhin, dass die seitlichen Klebestreifen aufgrund ihrer zwangsläufig geringen Klebefläche immer eine Schwachstelle in der Umhüllung darstellen.

Auf ein Klebeband der eingangs genannten Art, das zur Längsummantelung von langgestrecktem Gut eingesetzt wird, bezieht sich u.a. die WO 2006/108871 A1, welche auch eine umfangreiche Analyse zum diesbezüglich bekannten Stand der Technik enthält. Konkret beschreibt das Dokument ein Verfahren zum Ummanteln von langgestrecktem Gut mit einer Umhüllung, die ein erstes und ein zweites einseitig klebend ausgerüstetes Klebeband aufweist, welche in Laufrichtung jeweils klebemasseseitig mit Versatz aufeinander laminiert sind, wobei die freie Kante des ersten Klebebands der Umhüllung parallel zur Mittelachse derart ausgerichtet wird, dass bezogen auf die Mittelachse des Gutes die Klebemasse des ersten Klebebands außenwärts liegt. Das erste Klebeband der Umhüllung wird mit der freien Kante an das Gut geführt und um das Gut gewickelt, so dass das erste Klebeband das Gut im Wesentlichen vollständig umschlägt. Danach wird das zweite Klebeband der Umhüllung in einer weiteren Wicklung um das Gut geführt, wobei die offene Klebemasse des zweiten Klebebands auf der offenen Klebemasse des ersten Klebebands verklebt, so dass das Gut stets von zumindest zwei Lagen Klebeband umgeben ist. Nachteilig bei dieser technischen Lösung ist die Notwendigkeit der Verwendung von zwei Klebebändern, was sich in einem erhöhten Materialaufwand, z. B. in einem hohen Klebstoffverbrauch, niederschlägt. Außerdem ist zu verzeichnen, dass bei dem bekannten Umhüllungsmaterial, bei dem das erste und das zweite Klebeband miteinander verklebt werden, immer -beide - Seiten klebrig sind. Bei einer aufgewickelten Rolle aus einer solchen Bahn ist also neben der Innenseite auch die Außenseite der Rolle klebrig, falls nicht der außen liegende klebende Bereich in aufwandserhöhender Weise durch einen zusätzlichen sogenannten Releaseliner, der später vor der Applikation des Klebebandes wieder entfernt werden muss, abgedeckt ist.

Die US 2007/104927 beschreibt eine Abdeckfolie zum Wickeln auf einen ummantelten Draht. Diese Abdeckfolie umfasst eine Basisfolie, die eine Streifenform aufweist, und ein Klebeband, das eine Klebefläche aufweist, welche auf einer Seite des Klebebandes ausgebildet ist. Das Klebeband ist an die Basisfolie gebunden, so dass es von einem Seitenkantenabschnitt der Basisfolie vorsteht.

Das deutsche Gebrauchsmuster DE 295 10 907 U1 betrifft eine Schutzummantelung für Kabel, Litzen u.dgl. und geht - wie an sich vorbekannt - von einem Filz- und Schaumstoffstreifen aus, dessen Innenseite mit Klebstoff belegt ist, jedoch steht - dank der Tatsache, dass auf der Außenseite des Filz- und Schaumstoffstreifens eine andersartige Materialbahn befestigt ist, die ganze Innenfläche zur Fixierung von langgestreckten Gegenständen zur Verfügung. Auch lassen sich dadurch eine hohe Abriebfestigkeit, gute Geräuschdämmung, gute Verarbeitbarkeit und leichte Verlegbarkeit bezogen auf den jeweiligen Anwendungsfall günstig miteinander kombinieren, wobei auch die Kosten fallen. Gemäß einer vorteilhaften Weiterbildung wird der Filz- oder Schaumstoffstreifen nach dem Aufkleben der zu schützenden Gegenstände zu einem Rohr geformt, wobei ein an der andersartigen äußeren Materialbahn befindlicher, innenseitig ebenfalls mit Klebstoff belegter Überschlag den Stoß der Längskanten schließt.

Das deutsche Gebrauchsmuster DE 94 00 574 U1 betrifft ein Klebeband, bestehend aus einem flexiblen, bandförmigen Träger und aus einer, selbstklebende Eigenschaften aufweisenden Beschichtung. Der Träger und/oder die Beschichtung besteht zumindest anteilig aus einem Material, welches vor einem erstmaligen Erhitzen auf eine bestimmte, materialspezifische Aushärttemperatur zunächst flexibel ist, so dass auch das Klebeband selbst entsprechend flexibel ist und daher in einer üblichen Weise verarbeitet und somit praktisch als "normales" Klebeband verwendet werden kann. Nach einer vorübergehenden Erhitzung zumindest auf die Aushärttemperatur erhält dann das erfindungsgemäße Klebeband aufgrund der dadurch bewirkten Aushärtung der aushärtbaren Materialkomponente eine hohe Formstabilität, indem das Material bzw. die aushärtbare Materialkomponente vorzugsweise duroplastische Eigenschaften bekommt.

Die US 2007/0154684 A1 beschreibt eine Schutzhülle zum Abdecken eines Kabelbaums, umfassend: eine äußere Schicht eines Gewebes, die sich über eine erste Länge und eine erste Breite erstreckt und eine nach innen gerichtete Oberfläche und eine nach außen gerichtete Oberfläche aufweist; eine Klebeschicht, die über der der Innenseite zugewandten Oberfläche der Außenschicht aufgebracht ist; und eine innere Schicht aus nicht gewebtem Stoff, die sich über eine zweite Länge und eine zweite Breite erstreckt, die kleiner als die erste Breite ist und eine nach außen weisende Oberfläche aufweist, die an der Klebeschicht haftet, wobei die innere Schicht auf der äußeren Schicht zentriert ist. Diese Schutzhülle kann als Klebeband der eingangs genannten Art aufgefasst werden.

Eine weitere dem eingangs genannten Klebeband nahekommende technische Lösung ist die im deutschen Gebrauchsmuster DE 297 11 387 U1 beschriebene Ummantelung für langgestreckte Gegenstände, insbesondere für Kabel, Kabelbäume, wie etwa in Kraftfahrzeugen, Hüllrohre und Verbünde hieraus. Diese weist einen innenliegenden Schaumstoffstreifen und eine außenliegende Gewebebahn auf, die mit dem Schaumstoffstreifen fest verbunden ist und mit einem ersten Rand über den Schaumstoffstreifen übersteht. Auf der Innenseite des überstehenden Gewebebahnrandes befindet sich ein Klebstoffauftrag.

Als technologischer Hintergrund zur Erfindung ist auch die US 4 327 246 A zu nennen, deren Inhalt sich wie folgt zusammenfassen lässt. Es werden verbesserte Abschirmelemente und Elektrokabelkonstruktionen beschrieben, die diese Abschirmelemente verwenden. Verschiedene Konfigurationen der Abschirmelemente können verwendet werden, um einen einzelnen Kabelkreis, der aus einem oder mehreren Leitern besteht, in zwei konzentrischen metallischen Abschirmschichten einzuschließen, die aus einem einzelnen Abschirmelement hergestellt sind, das eine elektrische Isolation für den Kabelkreis bereitstellt. Im Allgemeinen umfassen die Abschirmelemente ein längliches Band aus Isoliermaterial und ein Paar länglicher Folienstreifen, die parallel zum Band angeordnet sind. Die Folienstreifen sind mit gegenüberliegenden Seiten des Bandes verbunden und haben jeweils eine längliche Kante, die im allgemeinen mit gegenüberliegenden länglichen Kanten des Bandes fluchtet. Die selektive Verwendung von Schichten aus wärmeempfindlichem Dichtungsmaterial zum Versiegeln der Abschirmschichten schützt die Kabelkreise vor Feuchtigkeit.

Der Erfindung liegt die Aufgabe zugrunde, ein Klebeband der eingangs genannten Art zu schaffen, das eine weitgehend klebfreie Innenfläche aufweist, das bei der Längsummantelung sowohl manuell, als auch maschinell leicht verarbeitbar ist und dabei einen verringerten Herstellungs- und Montageaufwand aufweist. Dabei soll ein an spezielle Anwendungsfälle angepasstes Klebeband entwickelt werden, welches in sich die Möglichkeit einer hochflexiblen Umhüllung mit einem hohen Hitzeschutz und mit einem hohen Abriebschutz bei einer weitgehend klebfreien Innenfläche mit leichter Verarbeitung bei manueller oder maschineller Längsummantelung und dabei einem geringen Herstellungs- und Montageaufwand vereint.

Erfindungsgemäß wird dies gemäß Anspruch 1 dadurch erreicht, dass der erste Träger (2) aus einem Aluminiumverbundmaterial und der zweite Träger (4) aus einem PET-Gewebe bestehen, wobei das Aluminiumverbundmaterial aus mindestens zwei Schichten besteht, von denen die erste Schicht eine Aluminiumschicht ist und die zweite Schicht, auf die die Klebeschicht (3) aufgebracht ist, aus einer temperaturbeständigen Kunststofffolie oder aus textilem Trägermaterial besteht.

Durch die Erfindung wird auf diese Weise ein Klebeband bereitgestellt, das einerseits eine weitgehend klebfreie Innenseite aufweist, und damit vorteilhafterweise die Möglichkeit der Herstellung hochflexibler Umhüllungen auch für große Kabelsatzdurchmesser bietet, dessen Herstellung aber anderseits insofern vereinfacht ist, als sie nicht den Einsatz eines weiteren schmalen oder auch breiteren Klebebandstreifens erfordert.

Die klebenden Zonen befinden sich vorteilhafterweise bei dem erfindungsgemäßen Band nur auf einer Seite der Bahn und können bei einer Rollenfertigung problemlos - ohne die Verwendung eines Releaseliners - nach innen gewickelt werden. Ebenso kann das Band bei seinem Einsatz leicht wieder von einer solchen Rolle abgewickelt werden.

Dadurch, dass jeweils nur eine der miteinander verbundenen Trägerbahnen mit einer Klebeschicht versehen ist, halbiert sich im Vergleich zu der vorstehend beschriebenen bekannten technischen Lösung der Klebstoffverbrauch.

Hierbei können vorteilhafterweise verschiedene Ausführungsformen vorgesehen sein. So kann der zweite Träger an einer Seitenkante bündig mit einer Seitenkante des ersten Trägers verlaufen, wobei der erste Träger mit der Klebeschicht gegenüber der anderen Seitenkante des zweiten Trägers übersteht. Der erste Träger kann mit der Klebeschicht auch beidseitig gegenüber den Seitenkanten des zweiten Trägers überstehen oder es kann vorgesehen sein, dass der erste Träger mit der Klebeschicht einseitig gegenüber einer Seitenkante des zweiten Trägers übersteht und der zweite Träger auf der anderen Seite des ersten Trägers einseitig gegenüber einer Seitenkante des ersten Trägers übersteht. Des Weiteren ist es auch möglich, das der zweite Träger mindestens aus zwei voneinander getrennten Trägerteilen besteht, wobei das erste Trägerteil eine erste Breite und das zweite Trägerteil eine zweite Breite aufweist, wobei die Summe der Breiten der Trägerteile kleiner ist als die Breite des ersten Trägers.

Die seitlich überstehenden klebenden Bereiche des ersten Trägers können zur besseren Handhabung mit einem Trennpapier oder einer Trennfolie, die kurz vor der Applikation entfernt wird, abgedeckt sein.

Die beiden Träger bestehen aus unterschiedlichen Materialien, wobei zur Erzielung bestimmter erwünschter Eigenschaften - vorteilhafterweise auch unter Berücksichtigung materialökonomischer Aspekte - eine bestimmte Trägerkombinationen gewählt ist.

So kann mit dem ersten Träger aus einem Aluminiumverbundmaterial, der in einer Umhüllung für langgestrecktes Gut eine Außenlage bildet, und mit dem zweiten Träger aus PET-Gewebe (PET - Polyethylenterephtalat), der in der Umhüllung eine Innenlage bildet, ein hoher Hitzeschutz in Kombination mit einem hohen Abriebschutz erzielt werden.

Weitere vorteilhafte Ausgestaltungsmerkmale der Erfindung sind in den Unteransprüchen sowie der folgenden Beschreibung enthalten.

Anhand mehrerer durch die beiliegenden Zeichnungen veranschaulichter erfindungsgemäßer Ausführungsbeispiele wird die Erfindung näher erläutert.

Dabei zeigen Fig. 1 bis 4 jeweils eine schematische Querschnittsdarstellung des Aufbaus einer ersten bis vierten Ausführungsform eines erfindungsgemäßen Klebebandes. Fig. 5 und 6 zeigen zwei Ausführungsformen eines erfindungsgemäßen Klebebandes im jeweiligen Einsatzfall, d. h. nach Herstellung einer Umhüllung für langgestrecktes Gut.

In den Figuren der Zeichnung sind gleiche Teile stets auch mit den gleichen Bezugszeichen versehen, so dass sie in der Regel auch jeweils nur einmal beschrieben werden.

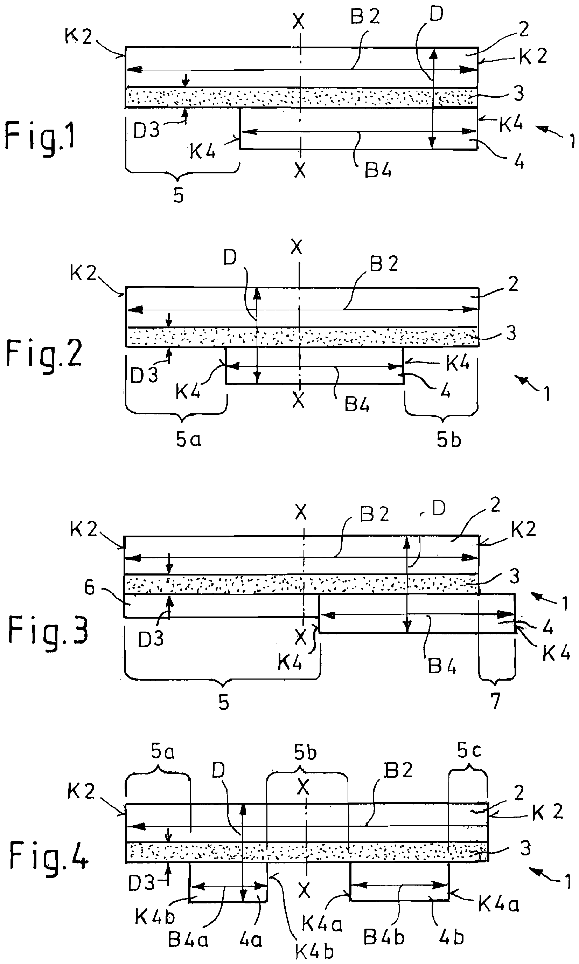

Wie zunächst Fig. 1 veranschaulicht, umfasst ein erfindungsgemäßes Klebeband 1, insbesondere ein Kabelwickelband für den Automobilbau, einen bandförmigen ersten Träger 2, der mindestens auf einer Seite mit einer selbstklebenden Klebeschicht 3 versehen ist, die insbesondere aus einem Haftklebstoff bestehen kann.

Wie zunächst Fig. 1 veranschaulicht, umfasst ein erfindungsgemäßes Klebeband 1, insbesondere ein Kabelwickelband für den Automobilbau, einen bandförmigen ersten Träger 2, der mindestens auf einer Seite mit einer selbstklebenden Klebeschicht 3 versehen ist, die insbesondere aus einem Haftklebstoff bestehen kann.

Erfindungsgemäß ist vorgesehen, dass auf die Klebeschicht 3 ein zweiter Träger 4 auflaminiert ist, der eine geringere Breite B4 aufweist als die Breite B2 des ersten Trägers 2.

Die einzelnen Ausführungsbeispiele des erfindungsgemäßen Bandes weisen alle diesen gleichen Grundaufbau auf. Sie unterscheiden sich jedoch hinsichtlich der Details der Lage des zweiten Trägers 4 relativ zum ersten Träger und in der Ausführung des zweiten Trägers 4.

In der ersten Ausführung gemäß Fig. 1 ist vorgesehen, dass der zweite Träger 4 an einer Seitenkante K4 bündig mit einer Seitenkante K2 des ersten Trägers 2 verläuft, wobei der erste Träger 2 mit der Klebeschicht 3 gegenüber der anderen Seitenkante K4 des zweiten Trägers 4 im Überstandsbereich 5 übersteht. Dadurch wird bei der Umhüllung des langgestreckten Gutes vorteilhafterweise eine klebende Zone gebildet, die als Verschluss dient. Innen ist die Umhüllung völlig klebfrei.

In der zweiten Ausführung gemäß Fig. 2 ist vorgesehen, dass der erste Träger 2 mit der Klebeschicht 3 beidseitig gegenüber den Seitenkanten K4 des zweiten Trägers 4 übersteht. Insbesondere kann der zweite Träger 4 dabei symmetrisch oder vorzugsweise asymmetrisch zur einer längs verlaufenden Mittenachse oder Mittenebene X-X des ersten Trägers 2 angeordnet sein. Im Falle einer asymmetrischen Anordnung kann ein kleinerer Überstandsbereich 5b zum Vorfixieren des zu umwickelnden Gutes dienen, während der größere Überstandsbereich - wie bei der ersten Ausführung beschrieben - als Verschluss fungieren kann.

In der dritten Ausführung gemäß Fig. 3 ist vorgesehen, dass der erste Träger 2 mit der Klebeschicht 3 einseitig gegenüber einer Seitenkante K4 des zweiten Trägers 4 übersteht und der zweite Träger 4 auf der anderen Seite des ersten Trägers 2 (ohne Klebebeschichtung 3) einseitig gegenüber einer Seitenkante K2 des ersten Trägers 2 übersteht. Der Überstandsbereich 7 ohne Klebebeschichtung 3 kann beim Umwickeln des Gutes mit dem klebenden Überstandsbereich 5 verbunden werden. Der Vorteil dieser Ausführung besteht dabei darin, dass die gebildete Umhüllung an jeder Stelle die gleiche Dicke besitzt und es nicht im Verklebungsbereich zu einer Verdickung kommt.

In der vierten Ausführung gemäß Fig. 4 ist vorgesehen, dass der zweite Träger 4 mindestens aus zwei voneinander getrennten Trägerteilen 4a, 4b besteht, wobei das erste Trägerteil 4a eine erste Breite B4a und das zweite Trägerteil 4b eine zweite Breite B4b aufweist und die Summe der Breiten B4a, B4b der Trägerteile 4a, 4b kleiner ist als die Breite B2 des ersten Trägers 2. Durch den in der Mitte liegenden und die beiden randseitigen, mit der Klebeschicht 3 bedeckten, aber nicht von dem zweiten Träger 4 bedeckte Bereiche 5a, 5b, 5c des ersten Trägers 2 können - ähnlich wie bei der Ausführung gemäß Fig. 2 - zwei (es könnten auch mehr sein) Zonen zur Vorfixierung verschiedener zu umhüllender Güter, wie beispielsweise eines elektrischen und eines Lichtleiterstranges, genutzt werden, während ein randseitig liegender Bereich 5a, 5c wiederum als Verschluss dient.

Vor der Applikation des erfindungsgemäßen Klebebandes können - wie in Fig. 3 beispielhaft dargestellt - seitlich gegenüber dem zweiten Träger 4 überstehende, mit der Klebeschicht 3 bedeckte Bereiche 5 des ersten Trägers 2 mit einem Trennpapier oder einer Trennfolie 6 abgedeckt sein. Dies gilt auch für den Fall, dass wie in Fig. 2 und 4 dargestellt - mehrere, randseitig oder auch in der Mitte liegende - mit der Klebeschicht 3 bedeckte Bereiche 5a, 5b, 5c des ersten Trägers 2 vorhanden sind, die nicht von dem zweiten Träger 4 bedeckt sind. Um den Abzug zu erleichtern, kann die Trennfolie mit Vorteil auch breiter ausgeführt sein als der jeweils abzudeckende Bereich 5. Bereiche 7, in denen der zweite Träger 4 gegenüber dem ersten Träger 2 übersteht, bedürfen keiner Abdeckung durch eine Trennfolie 6. Ebenso ist es möglich, wenn das erfindungsgemäße Klebeband in der Lieferform einer auf sich selbst gewickelten Rolle zur Anwendung kommen soll, überhaupt keine Abdeckung mit einer Trennfolie 6 vorzusehen.

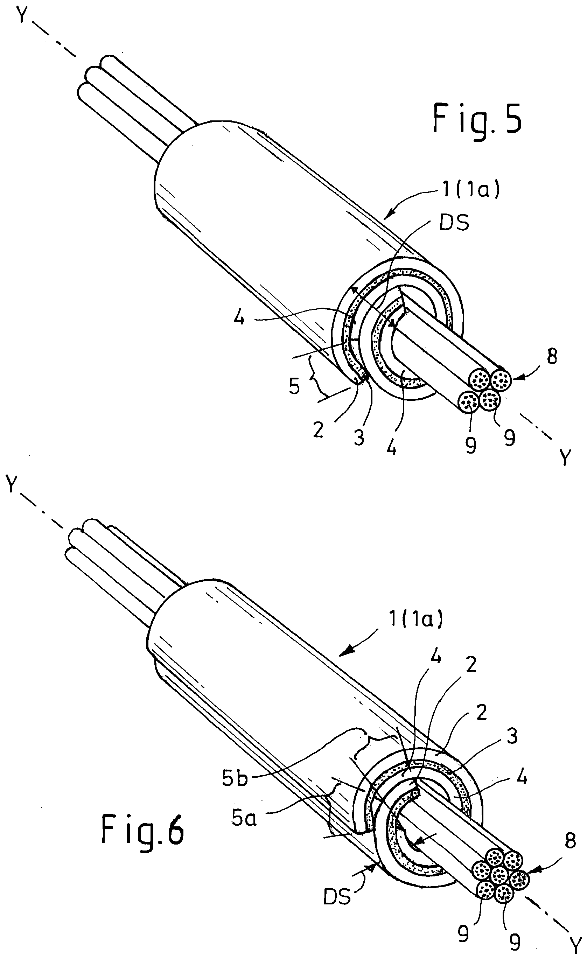

Ein erfindungsgemäßes Klebeband 1 gemäß den dargestellten Ausführungen kann einseitig oder beidseitig überlappend verklebt werden. Zwei Beispiele für mit dem Klebeband 1 hergestellte Umhüllungen 1a sind in Fig. 5 und 6 dargestellt.

Einen bevorzugten Anwendungsfall des erfindungsgemäßen Klebebandes 1 stellt das Umwickeln von Kabelsätzen als langgestrecktem Gut dar, das in Fig. 5 und 6 jeweils mit dem Bezugszeichen 8 bezeichnet ist. Hierbei kann aus mehreren, jeweils mit einer Isolierung versehenen, insbesondere elektrischen, Leitungen 9 durch ein zumindest teilweises Umwickeln - beispielsweise an nicht isolierten Stellen der Leitungen 9 - mit dem erfindungsgemäßen Klebeband 1 ein Kabelbaum, insbesondere für die Automobilindustrie, gebildet werden. Die Umwicklung erfolgt dabei nicht - wie üblich - schraubenlinienförmig, sondern derart, dass beim Umwickeln eine Längsachse des Bandes (in Fig. 1 bis 4 mit "X-X" bezeichnet) im Wesentlichen parallel zur Verlaufsrichtung Y-Y des langgestreckten Gutes 8 ausgerichtet ist. Im Querschnitt gesehen liegt das Klebeband 1 dabei in Form einer archimedischen Spirale um das Gut. Im Wesentlichen parallel bedeutet dabei, dass beispielsweise unter kleinem spitzen Winkel verlaufende seitliche Ausknickungen oder Verdrillungen, wie sie bei Kabeln 9 in einem aus mehreren Leitern bestehenden Kabelsatz 8 auftreten können, unberücksichtigt bleiben. Die Lauf- bzw. Längsrichtung X-X des Klebebandes 1 ist also im Wesentlichen identisch mit der Längserstreckungsrichtung Y-Y des zu umhüllenden Gutes 8.

Fig. 5 zeigt im Besonderen eine Umhüllung 1a, die aus einem erfindungsgemäßen Klebeband 1 gemäß der Ausführungsform in Fig. 1 hergestellt ist. Der einzige vorhandene Überstandsbereich 5 liegt dabei als Verschluss am äußeren Ende des spiralförmig gewickelten Klebebandes 1. Das Innere der Umhüllung 1a ist völlig klebfrei.

Fig. 6 zeigt eine Umhüllung 1a, die aus einem erfindungsgemäßen Klebeband 1 gemäß der Ausführungsform in Fig. 2 hergestellt ist. Einer der beiden vorhandenen Überstandsbereiche 5a liegt dabei verschließend am äußeren Ende des spiralförmig gewickelten Klebebandes 1, während der andere Überstandsbereich 5b innen liegt und fixierend auf das langgestreckte Gut 8 wirkt.

Bei allen figürlich dargestellten Ausführungsformen kann vorgesehen sein, dass sowohl der erste Träger 2, als auch der zweite Träger 4 aus einer Folie oder einem Folienverbundmaterial oder aus einem Gewebe, insbesondere aus einem Polyester- oder Polyamidgewebe, oder aus einem Vlies bestehen. Hierbei ist es durch spezielle Trägerkombinationen möglich, ein gewünschtes Eigenschaftsprofil des erfindungsgemäßen Klebebandes 1 einzustellen.

Die Prüfung des Eigenschaftsprofils von Kabelschutzsystemen erfolgt in der Automobilindustrie zumeist nach umfangreichen Normenwerken. Als gemeinsame Prüfrichtlinie der Firmen Audi, BMW, Daimler, Porsche und VW enthält die LV 312 "Schutzsysteme für Leitungssätze in Kraftfahrzeugen" Prüfungsvorschriften sowie Kriterien und quantitative Angaben für anwendungstechnisch wichtige Größen, wie die Temperaturklasse, das Geräuschdämpfungsverhalten und für die Abriebbeständigkeit.

Hinsichtlich der thermischen Beständigkeit ist in der LV 312 die in der nachstehenden Tabelle 1 wiedergegebene Klassifizierung vorgesehen.

**Tabelle 1: Temoeraturklassen nach LV 312**

| Klasse | Dauergebrauchstemperatur | Kurzzeit-Temperatur | Temperatur für thermische Überlast |
|---|---|---|---|
| | T_{U} bis T_{O} in °C | (T_{O} + 25) °C | (T_{O} + 50) °C |
| A | - 40 bis 85 | 110 ± 2 | 135 ± 3 |
| B | - 40 bis 100 | 125 ± 3 | 150 ± 3 |
| C | - 40 bis 125 | 150 ± 3 | 175 ± 3 |
| D | - 40 bis 150 | 175 ± 3 | 200 ± 3 |

Hinsichtlich der Abriebbeständigkeit ist in der LV 312 die in der nachstehenden Tabelle 2 wiedergegebene Klassifizierung vorgesehen.

**Tabelle 2: Abriebschutzklassen nach LV 312**

| Abriebklasse | Anforderung (Anzahl Hübe) |
|---|---|
| A - kein Abriebschutz | < 100 |
| B - geringer Abriebschutz | 100-499 |
| C - mittlerer Abriebschutz | 500 - 999 |
| D - hoher Abriebschutz | 1000 - 4999 |
| E - sehr hoher Abriebschutz | 5000 und mehr |

Auch hinsichtlich des Geräuschdämpfungsverhaltens sieht die LV 312 eine Einteilung in fünf Klassen vor, die in der nachstehenden Tabelle 3 wiedergegeben ist.

**Tabelle 3: Geräuschdämpfungsklassen nach LV 312**

| Geräuschdämpfungsklasse | Anforderung |
|---|---|
| A - keine Geräuschdämpfung | 0 bis 2 dB (A) |
| B - geringe Geräuschdämpfung | > 2 bis 5 dB (A) |
| C - mittlere Geräuschdämpfung | > 5 bis 10 dB (A) |
| D - hohe Geräuschdämpfung | > 10 bis 15 dB (A) |
| E - sehr hohe Geräuschdämpfung | > 15 dB (A) |

Als weitere anwendungstechnisch wichtige Prüfungen sind in der genannten Richtlinie beispielsweise auch Prüfmethoden für die Kompatibilität von Klebebändern mit elektrischen Fahrzeugleitungen sowie für die Chemikalienbeständigkeit, das Foggingsowie für das Flagging-Verhalten beschrieben.

Schutzsysteme gegen Strahlungshitzeschutz werden entsprechend US-Norm SAE J2302 "Thermal effectiveness of sleeve insulations" charakterisiert.

Unter Verzicht auf den Einsatz der bei bekannten Sleeveumhüllungen vorgesehenen schmalen Verschlussstreifen oder zusätzlichen Klebebänder wird mit einem erfindungsgemäßen Klebeband 1 nicht nur eine einfachere Herstellung möglich, sondern das erfindungsgemäße Klebeband 1 gewährleistet auch eine verbesserte Festigkeit des Verschlusses. Des Weiteren ist durch die weitgehend klebfreie Innenseite - wie erwähnt - die Möglichkeit der Herstellung hochflexibler Umhüllungen 1a gegeben. Bei Einsatz von UV-vernetzten Acrylatklebstoffen (im Weiteren: UV-Acrylate), die eine hohe Temperaturbeständigkeit aufweisen, werden so für das langgestreckte Gut 8 Umhüllungen 1a erhalten, die bei normaler Biegebeanspruchung auch bei der Temperaturklasse D gemäß der vorstehenden Tabelle 1 einsetzbar sind. Grundsätzlich ist aber auch der Einsatz von kautschukbasierten Klebstoffen möglich, wobei der materialökonomische Vorteil der Erfindung in Bezug auf die Klebstoffmenge bereits erwähnt wurde.

Durch den doppellagigen Aufbau des erfindungsgemäßen Klebebandes 1 mit dem ersten Träger 2 und dem zweiten Träger 4 wird ein erheblich höherer Abriebschutz erreicht als bei einlagigen Ummantelungen. Die Dicke (Bezugszeichen DS in Fig. 5 und 6) der Schutzschicht 1a entspricht bei dem erfindungsgemäßen Aufbau zumindest der eines mit 50 Prozent Überlappung gewickelten konventionellen Klebebandes, jedoch im applizierten bzw. Montagezustand mit dem Aufbau: Träger 2 - Klebeschicht 3 - Träger 4. Bereichsweise kann diese Dicke DS - wie dargestellt - auch größer sein.

Die Grammatur - und damit eine Dicke D3 - der Klebeschicht 3 richtet sich insbesondere nach der Oberflächenstruktur der Träger 2, 4. Für textile Träger 2, 4 liegt eine optimale spezifische Masse der Klebeschicht 3 vorzugsweise im Bereich von 70 bis 140 g/m², während bei Folienträgern bereits eine Grammatur von 40 bis 80 g/m² als ausreichend erscheint.

Bei Wahl unterschiedlicher Materialien für die beiden Träger 2, 4, die im applizierten Zustand des erfindungsgemäßen Bandes 1 jeweils die innere und äußere Seite der Umhüllung 1a bilden, können - wie erwähnt - leicht verschiedenartige Funktionen von Klebebändern miteinander kombiniert werden.

Die Ausführung gemäß der Erfindung ist dabei:
- Erster Träger 2: Verbundmaterial aus mindestens zwei Schichten, wobei die erste der Schichten eine metallische Schicht - und zwar eine Aluminiumschicht - ist, und auf die zweite Schicht, die aus einer temperaturbeständigen Kunststofffolie oder textilem Trägermaterial besteht, die - vorzugsweise druckempfindliche - Klebeschicht 3 aufgebracht ist; zweiter Träger 4: PET-Gewebe; Funktionen: Hitze- und Abriebschutz;

Nicht erfindungsgemäße Ausführungen sind:
erster Träger 2: PET-Gewebe; zweiter Träger 4: PET-Gewebe; Funktion: erhöhter Abriebschutz;
- erster Träger 2: PET-Gewebe; zweiter Träger 4: PET-Vlies; Funktionen: Abriebschutz und Geräuschdämpfung;
- erster Träger 2: PET-Folie; zweiter Träger 4: PET-Gewebe; Funktionen: Feuchtigkeits- und Abriebschutz;
- erster Träger 2: PA-Gewebe; zweiter Träger 4: PET-Gewebe; Funktion: erhöhter Abriebschutz.

Gegenüber konventionellen Kabelwickelbändern und auch gegenüber Umhüllungen, die aus drei einseitig klebenden Bändern bzw. Klebebandstreifen hergestellt sind und eine teilweise klebende Innenseite aufweisen, wird die Abriebschutzwirkung eines erfindungsgemäßen Klebebandes 1 nochmals dadurch gesteigert, dass die aus dem erfindungsgemäßen Klebeband 1 hergestellte Schutzumhüllung 1a auf dem Gut 8, wie z. B. einem Kabelsatz, beweglich sein kann. Dies hat zur Folge, dass einwirkende Kräfte sich auf eine größere Fläche verteilen und dadurch nur vergleichsweise geringere Schädigungen hervorrufen können. Messbar wird dieser Effekt bei einer beweglichen Befestigung der Umhüllung 1a auf dem Abriebdorn einer Abriebmessapparatur nach LV 312.

Dies verdeutlicht auch die nachstehende Tabelle 4, in der die bei einer Prüfung gemäß LV 312 an einem 5-mm-Dorn erreichte Anzahl der Doppelhübe einer mit einem Klebeband 1 hergestellten Umhüllung 1a (in der Tabelle mit "C2" bezeichnet) den entsprechenden Werten von Umhüllungen bekannter Bänder gegenüber gestellt ist. Das geprüfte Klebeband 1 wies dabei zwei PET-Gewebe-Träger 2, 4 auf und wurde in der Abriebapparatur einseitig befestigt. Bei der in der Tabelle mit "A" bezeichneten Umhüllung handelte es sich um eine solche gemäß der eingangs erwähnten DE 100 36 805 A1 und bei der mit "B" bezeichneten Umhüllung um eine solche aus einem konventionellen PET-Gewebeklebeband, das doppellagig schraubenlinienförmig mit 50 Prozent Überlappung der Lagen geprüft wurde.

**Tabelle 4: Abriebschutz verschiedener Klebebänder nach LV 312**

| Klebeband | Erreichte Doppelhübe |
|---|---|
| A | ca. 1000 |
| B | ca. 8000 |
| C2 | ca.20000 |

Tabelle 5 enthält weitere Angaben zum Aufbau und den Produkteigenschaften exemplarischer Ausführungen C1, C2, C3, wobei es sich nur bei der Ausführung C1 um ein erfindungsgemäßes Klebeband 1 handelt.

**Tabelle 5: Basisdaten erfindungsgemäßer Klebebänder**

| Größe | C1 | C2 | C3 |
|---|---|---|---|
| erster Träger 2 (außen) | Alu-Verbundfolie | PET-Gewebe 120 g/m² | PET-Gewebe 120 g/m² |
| Zweiter Träger 4 (innen) | PET-Gewebe 120 g/m² | PET-Gewebe 120 g/m² | PET -Vlies 240 g/m² |
| Klebeschicht 3 | UV-Acrylat 50 g/m² | UV-Acrylat 140 g/m² | Synthesekautschuk 140 g/m² |
| Dicke D (DIN EN 1942) | 0,3 mm | 0,5 mm | 0,9 mm |
| Bruchkraft (DIN EN 14410) | 300 N/cm | 580 N/cm | 300 N/cm |
| Reißdehnung (DIN EN 14410) | 40% | 45% | 45 % |
| Geräuschdämpfung | Klasse A | Klasse B | Klasse D |
| Abriebbeständigkeit | Klasse E | Klasse E | Klasse E |
| Hitzeschutz | Ja | Nein | Nein |

Der Trägerverbund des ersten Trägers 2 in der Ausführung C1 - im Tabellenfeld mit "Alu-Verbundfolie" bezeichnet - bestand dabei aus einer Folie, die ihrerseits aus einer 9 µm starken Aluminiumfolie und einer 15 µm starken PET-Folie hergestellt worden war.

Die Erfindung ist nicht auf das beschriebene Ausführungsbeispiel - z. B. auf die angegebenen Dicken der Schichten des Aluminiumverbundmaterials - beschränkt., sondern umfasst auch im Rahmen des Anspruchs 1 weitere Kombinationen von Trägern 2, 4, die zusätzlich auch anderen Klebebandeigenschaften, wie Kompatibilität mit elektrischen Fahrzeugleitungen, Chemikalienbeständigkeit, Fogging-und/oder Flagging-Verhaiten Rechnung tragen.

### Bezugszeichen

- 1: Klebeband
- 2: erster Träger
- 3: Klebeschicht
- 4: zweiter Träger
- 4a: erstes Trägerteil von 4
- 4b: zweites Trägerteil von 4
- 5, 5a, 5b, 5c: Überstandsbereiche von 2/3 gegenüber 4
- 6: Trennfolie auf 5, 5a, 5b, 5c
- 7: Überstandsbereich von 4 gegenüber 2
- 8: langggestrecktes Gut (Kabelsatz)
- 9: Kabel von 8

- B2: Breite von 2
- B4: Breite von 4
- B4a: Breite von 4a
- B4b: Breite von 4b
- D: Dicke von 1
- D3: Dicke von 3
- DS: Dicke von 1a
- K2: Kante von 2
- K4: Kante von 4
- K4a: Kante von 4a
- K4b: Kante von 4b
- X-X: Mittenachse bzw. -ebene von 2
- Y-Y: Längserstreckungsrichtung/-achse von 8

## Patentansprüche

1. Klebeband (1) zur Längsummantelung von langgestrecktem Gut (8), umfassend einen ersten bandförmigen Träger (2) und mindestens eine auf einer Seite des ersten Trägers (2) aufgetragene Klebeschicht (3), die sich über die gesamte Breite (B2) des ersten Trägers (2) erstreckt, wobei auf die Klebeschicht (3) ein zweiter Träger (4) auflaminiert ist, der eine geringere Breite (B4) aufweist als die Breite (B2) des ersten Trägers (2), wodurch der erste Träger (2) mit der Klebeschicht (3) mindestens gegenüber einer Seitenkante des zweiten Trägers (4) übersteht, wobei der zweite Träger (4) nicht mit einer Klebeschicht versehen ist und dazu bestimmt ist, im ummantelnden Zustand des langgestreckten Gutes (8) der dem langgestreckten Gut (8) nächste Träger zu sein,
**dadurch gekennzeichnet, dass** der erste Träger (2) aus einem Aluminiumverbundmaterial und der zweite Träger (4) aus einem PET-Gewebe bestehen, wobei das Aluminiumverbundmaterial aus mindestens zwei Schichten besteht, von denen die erste Schicht eine Aluminiumschicht ist und die zweite Schicht, auf die die Klebeschicht (3) aufgebracht ist, aus einer temperaturbeständigen Kunststofffolie oder aus textilem Trägermaterial besteht.

2. Klebeband (1) nach Anspruch 1,
**dadurch gekennzeichnet, dass** der zweite Träger (4) an einer Seitenkante (K4) bündig mit einer Seitenkante (K2) des ersten Trägers (2) verläuft, wobei der erste Träger (2) mit der Klebeschicht (3) gegenüber der anderen Seitenkante (K4) des zweiten Trägers (4) übersteht.

3. Klebeband (1) nach Anspruch 1,
**dadurch gekennzeichnet, dass** der erste Träger (2) mit der Klebeschicht (3) beidseitig gegenüber den Seitenkanten (K4) des zweiten Trägers (4) übersteht.

4. Klebeband (1) nach Anspruch 3,
**dadurch gekennzeichnet, dass** der zweite Träger (4) asymmetrisch zur einer längs verlaufenden Mittenachse (X-X) des ersten Trägers (2) angeordnet ist.

5. Klebeband (1) nach Anspruch 1,
**dadurch gekennzeichnet, dass** der erste Träger (2) mit der Klebeschicht (3) einseitig gegenüber einer Seitenkante (K4) des zweiten Trägers (4) übersteht und der zweite Träger (4) auf der anderen Seite des ersten Trägers (2) einseitig gegenüber einer Seitenkante (K2) des ersten Trägers (2) übersteht.

6. Klebeband (1) nach einem der Ansprüche 1 bis 5,
**dadurch gekennzeichnet,dass** der zweite Träger (4) mindestens aus zwei voneinander getrennten Trägerteilen (4a, 4b) besteht, wobei das erste Trägerteil (4a) eine erste Breite (B4a) und das zweite Trägerteil (4b) eine zweite Breite (B4b) aufweist und die Summe der Breiten (B4a, B4b) der Trägerteile (4a, 4b) kleiner ist als die Breite (B2) des ersten Trägers (2).

7. Klebeband (1) nach einem der Ansprüche 1 bis 6,
**dadurch gekennzeichnet, dass** seitlich gegenüber dem zweiten Träger (4) überstehende, mit der Klebeschicht (3) bedeckte Bereiche (5, 5a, 5b, 5c) des ersten Trägers (2) mit einem Trennpapier oder einer Trennfolie (7) abgedeckt sind.

8. Klebeband (1) nach einem der Ansprüche 1 bis 7,
**dadurch gekennzeichnet, dass** die Klebeschicht (3) aus einem UV-vernetzten Acrylatklebstoff oder aus einem kautschukbasierten Klebstoff besteht.

9. Klebeband (1) nach einem der Ansprüche 1 bis 8,
**dadurch gekennzeichnet, dass** die Klebeschicht (3) eine Grammatur im Bereich von 70 bis 140 aufweist.

10. Kabelbaum, bestehend aus einem Kabelsatz (8), der eine Umhüllung (1a) mit einem Klebeband (1) nach einem der Ansprüche 1 bis 9 aufweist, wobei eine Längsachse (X-X) des Klebebandes (1) im Wesentlichen parallel zur Verlaufsrichtung (Y-Y) des Kabelsatzes (8) ausgerichtet ist.

11. Kabelbaum nach Anspruch 10,
**dadurch gekennzeichnet, dass** das Klebeband (1) - im Querschnitt gesehen - in Form einer archimedischen Spirale um den Kabelsatz (8) gewickelt ist.

12. Kabelbaum nach Anspruch 10 oder 11,
**dadurch gekennzeichnet, dass** die Umhüllung (1a) auf dem Kabelsatz (8) beweglich ist.

## Claims

1. Adhesive tape (1) for longitudinally sheathing elongate goods (8), comprising a first tape-like carrier (2) and at least one adhesive layer (3) which is applied on one side of the first carrier (2) and which extends over the entire width (B2) of the first carrier (2), wherein a second carrier (4) is laminated onto the adhesive layer (3), said second carrier having a smaller width (B4) than the width (B2) of the first carrier (2), as a result of which the first carrier (2) protrudes along with the adhesive layer (3) at least in relation to a side edge of the second carrier (4), wherein the second carrier (4) is not provided with an adhesive layer and is intended to be the carrier next to the elongate goods (8) in the sheathed state of the elongate goods (8),
**characterized in that** the first carrier (2) is composed of an aluminium composite material and the second carrier (4) is composed of a PET woven fabric, wherein the aluminium composite material is composed of at least two layers, of which the first layer is an aluminium layer and the second layer, onto which the adhesive layer (3) is applied, is composed of a temperature-resistant plastic film or of textile carrier material.

2. Adhesive tape (1) according to Claim 1,
**characterized in that**, at one side edge (K4), the second carrier (4) runs flush with a side edge (K2) of the first carrier (2), wherein the first carrier (2) protrudes along with the adhesive layer (3) in relation to the other side edge (K4) of the second carrier (4).

3. Adhesive tape (1) according to Claim 1,
**characterized in that** the first carrier (2) protrudes along with the adhesive layer (3) on both sides in relation to the side edges (K4) of the second carrier (4).

4. Adhesive tape (1) according to Claim 3,
**characterized in that** the second carrier (4) is arranged asymmetrically with respect to a longitudinally running centre axis (X-X) of the first carrier (2).

5. Adhesive tape (1) according to Claim 1,
**characterized in that** the first carrier (2) protrudes along with the adhesive layer (3) on one side in relation to a side edge (K4) of the second carrier (4), and, on the other side of the first carrier (2), the second carrier (4) protrudes on one side in relation to a side edge (K2) of the first carrier (2).

6. Adhesive tape (1) according to one of Claims 1 to 5,
**characterized in that** the second carrier (4) is composed at least of two separate carrier parts (4a, 4b), wherein the first carrier part (4a) has a first width (B4a) and the second carrier part (4b) has a second width (B4b), and the sum of the widths (B4a, B4b) of the carrier parts (4a, 4b) is smaller than the width (B2) of the first carrier (2).

7. Adhesive tape (1) according to one of Claims 1 to 6,
**characterized in that** regions (5, 5a, 5b, 5c) of the first carrier (2) which protrude laterally in relation to the second carrier (4) and which are coated with the adhesive layer (3) are covered with a release paper or a release film/foil (7).

8. Adhesive tape (1) according to one of Claims 1 to 7,
**characterized in that** the adhesive layer (3) is composed of a UV-crosslinked acrylate adhesive material or of a rubber-based adhesive material.

9. Adhesive tape (1) according to one of Claims 1 to 8,
**characterized in that** the adhesive layer (3) has a grammage in the range of 70 to 140 g/m².

10. Cable harness composed of a cable set (8) which has a sheath (1a) with an adhesive tape (1) according to one of Claims 1 to 9, wherein a longitudinal axis (X-X) of the adhesive tape (1) is oriented substantially parallel to the direction of extent (Y-Y) of the cable set (8).

11. Cable harness according to Claim 10,
**characterized in that** the adhesive tape (1) - as seen in cross section - is wrapped in the form of an Archimedean spiral around the cable set (8).

12. Cable harness according to Claim 10 or 11,
**characterized in that** the sheath (1a) is movable on the cable set (8).

## Revendications

1. Bande adhésive (1) pour l'enveloppement longitudinal d'un article allongé (8), comprenant un premier support en forme de bande (2) et au moins une couche adhésive (3) appliquée sur un côté du premier support (2), qui s'étend sur la largeur totale (B2) du premier support (2), un deuxième support (4) étant stratifié sur la couche adhésive (3), qui présente une largeur (B4) plus faible que la largeur (B2) du premier support (2), le premier support (2) pourvu de la couche adhésive (3) dépassant ainsi au moins par rapport à un bord latéral du deuxième support (4), le deuxième support (4) n'étant pas muni d'une couche adhésive et étant destiné à être le support le plus proche de l'article allongé (8) à l'état enveloppé de l'article allongé (8), **caractérisée en ce que** le premier support (2) est constitué par un matériau composite d'aluminium et le deuxième support (4) est constitué par un tissu de PET, le matériau composite d'aluminium étant constitué par au moins deux couches, parmi lesquelles la première couche est une couche d'aluminium et la deuxième couche, sur laquelle la couche adhésive (3) est appliquée, est constituée par une feuille en matière plastique résistante à la température ou par un matériau support textile.

2. Bande adhésive (1) selon la revendication 1, **caractérisée en ce que** le deuxième support (4) est aligné au niveau d'un bord latéral (K4) avec un bord latéral (K2) du premier support (2), le premier support (2) pourvu de la couche adhésive (3) dépassant par rapport à l'autre bord latéral (K4) du deuxième support (4).

3. Bande adhésive (1) selon la revendication 1, **caractérisée en ce que** le premier support (2) pourvu de la couche adhésive (3) dépasse bilatéralement par rapport aux bords latéraux (K4) du deuxième support (4).

4. Bande adhésive (1) selon la revendication 3, **caractérisée en ce que** le deuxième support (4) est agencé asymétriquement par rapport à l'axe central s'étendant longitudinalement (X-X) du premier support (2).

5. Bande adhésive (1) selon la revendication 1, **caractérisée en ce que** le premier support (2) pourvu de la couche adhésive (3) dépasse unilatéralement par rapport à un bord latéral (K4) du deuxième support (4) et le deuxième support (4) dépasse, sur l'autre côté du premier support (2), unilatéralement par rapport à un bord latéral (K2) du premier support (2).

6. Bande adhésive (1) selon l'une quelconque des revendications 1 à 5, **caractérisée en ce que** le deuxième support (4) est constitué par au moins deux parties de support séparées l'une de l'autre (4a, 4b), la première partie de support (4a) présentant une première largeur (B4a) et la deuxième partie de support (4b) présentant une deuxième largeur (B4b), et la somme des largeurs (B4a, B4b) des parties de support (4a, 4b) étant inférieure à la largeur (B2) du premier support (2).

7. Bande adhésive (1) selon l'une quelconque des revendications 1 à 6, **caractérisée en ce que** des zones (5, 5a, 5b, 5c) du premier support (2) couvertes avec la couche adhésive (3), dépassant latéralement par rapport au deuxième support (4), sont recouvertes avec un papier de séparation ou une feuille de séparation (7).

8. Bande adhésive (1) selon l'une quelconque des revendications 1 à 7, **caractérisée en ce que** la couche adhésive (3) est constituée par un adhésif acrylate réticulé par UV ou par un adhésif à base de caoutchouc.

9. Bande adhésive (1) selon l'une quelconque des revendications 1 à 8, **caractérisée en ce que** la couche adhésive (3) présente un grammage dans la plage allant de 70 à 140 g/m².

10. Faisceau de câbles, constitué par un ensemble de câbles (8), qui comprend un enrobage (1a) avec une bande adhésive (1) selon l'une quelconque des revendications 1 à 9, un axe longitudinal (X-X) de la bande adhésive (1) étant orienté essentiellement en parallèle à la direction d'extension (Y-Y) de l'ensemble de câbles (8).

11. Faisceau de câbles selon la revendication 10, **caractérisé en ce que** la bande adhésive (1) est enroulée, observé dans la section transversale, sous la forme d'une spirale d'Archimède autour de l'ensemble de câbles (8).

12. Faisceau de câbles selon la revendication 10 ou 11, **caractérisé en ce que** l'enrobage (1a) est mobile sur l'ensemble de câbles (8).
